# EUROPEAN PATENT APPLICATION

(11) **EP 2 047 919 A1**
(43) Date of publication of application: **15.04.2009**
(21) Application number: 08166502.8
(22) Date of filing: 13.10.2008
(51) Int. Cl.: B09B 3/00, B03B 9/00, C04B 18/08, C04B 7/28

(54) **Improvements in and relating to waste handling**

(30) Priority: 12.10.2007 GB 0719963
(71) Applicant: Future Industrial Services Limited, Kirkby Liverpool Merseyside L33 7UF (GB)
(72) Inventor: Casey, Daniel, Liverpool Merseyside L33 7UF (GB); Collier, Andrew James Harvey, Liverpool Merseyside L33 7UF (GB); Jones, Andrew, Liverpool Merseyside L33 7UF (GB)
(74) Representative: Johnson, Graham Pierssene

(57) **Abstract**

There is provided a method of treating waste ash (10). The method comprises combining waste ash with water to form a waste ash slurry (30); treating the waste ash slurry and/or the waste ash and/or water to be combined with the waste ash to lower the pH thereof; and dewatering the waste ash slurry. The method further comprises the step of washing the resultant ash product with water to provide a washed ash product (120) by re-cycling water (70) removed from the waste ash slurry.

## Description

### FIELD OF INVENTION

The present invention relates to waste processing and in particular to the processing of waste ash.

### BACKGROUND TO THE INVENTION

Large quantities of waste are produced each year and a known means for dealing with domestic and burnable trade waste is incineration. The incineration of such waste results in a residue product described as air pollution control (APC) residue (also referred to as "fly ash").

In a known process burnable domestic and/or trade and/or clinical waste is fed into a municipal incinerator and burnt. Hot combustion gases travel through the incinerator and pass over boiler and economiser tubes. Heat is transferred to water in the boiler and economiser tubes and the combustion gases are cooled. Following this the acidic gases are mixed with hydrated lime and powder activated carbon (PAC). The gases then pass to a gas cleaning system. Dust from the gas stream collects on filter bags or electrostatic precipitators. The collected dust, which is the APC residue, is then removed to silos or bags where it is stored before removal from the incinerator site as waste.

The precise nature of the APC residue depends upon the waste incinerated but it is generally found to contain calcium hydroxide and/or calcium oxide in an amount of above 10% by weight. At such levels these materials are irritants and accordingly the handling and disposal of such APC residue is a matter which must be treated with care.

A known method of disposal of APC residue is by landfill via "consolidation" processes. However, landfill may not be a desirable manner to dispose of such APC residues, even when consolidated. It would be preferable to provide means by which this waste may be recycled.

Applicant's own patent application EP1762309 describes an improved process for treating waste ash which is an improvement upon known methods of disposal and allows for APC residue to be recycled. However, there remains room for improved methods of treating and recycling APC residue.

Accordingly, the present invention aims to address at least one disadvantage associated with the prior art whether discussed herein or otherwise.

### SUMMARY OF INVENTION

According to a first aspect of the present invention there is provided a method of treating waste ash, the method comprising the steps of:
(1) combining waste ash with water to form a waste ash slurry comprising water in an amount of at least 50% by weight;
(2) treating the waste ash slurry and/or the waste ash and/or water to be combined with the waste ash to lower the pH thereof; and
(3) dewatering the waste ash slurry such that the resultant ash product comprises water in a lower amount than said waste ash slurry; and wherein the method further comprises the step of:
(4) washing the resultant ash product of step (3) with water to provide a washed ash product and wherein said washing comprises re-cycling water removed from the waste ash slurry in step (3).

Suitably, step (3) comprises dewatering the waste ash slurry using a filter press and the water removed from the waste ash slurry in step (3) which is re-cycled in step (4) comprises the filtrate.

Suitably, step (4) comprises dewatering the washed ash product so as to provide a dewatered and washed ash product.

Suitably the washing operation of step (4) comprises washing the resultant ash product of step (3) with recycled water removed from the waste ash slurry in step (3) and fresh water.

As used herein the term "fresh water" comprises water other than the water removed from the waste ash slurry in step (3). Suitably, the term "fresh water" comprises any water which is substantially free of contaminants, for example water from a mains water supply or river water.

Step (4) may comprise washing the resultant ash product of step (3) with re-cycled water and water from a mains water supply.

Step (4) may comprise washing the resultant ash product with water formed by combining re-cycled water removed from the waste ash slurry in step (3) and fresh water.

Suitably, step (4) comprises washing the resultant ash product of step (3) with re-cycled water removed from the waste ash slurry in step (3) and then with fresh water. Step (4) may thus comprise two distinct stages.

Suitably, step (4) comprises step (4A) of washing with recycled water removed from the waste ash slurry in step (3).

Suitably, step (4) comprises a step (4B) of washing with fresh water.

Suitably, steps (4A) and (4B) are performed sequentially.

Suitably, step (4) comprises step (4A) of washing the resultant ash product of step (3) with re-cycled water removed from the waste ash slurry in step (3).

Suitably, the washing operation of step (4A) comprises applying water to the resultant ash product of step (3) and may comprise dewatering the combination to provide a washed ash product.

Step (4A) may comprise re-cycling water removed from the waste ash slurry in step (3) and recombining it with the resultant ash product of step (3) and dewatering the combination to provide a washed ash product and a water product.

Step (4A) may comprise washing the resultant ash product by passing water through it. The resultant ash product may be situated in a filter press and water may be applied to it at a pressure of between 2 and 15 bar, suitably between 5 and 10 bar, for example around 7 bar. The resultant ash product may thus be combined with water and dewatered substantially simultaneously as the pressure of application may cause the water to pass through the filter after application to the ash product.

Step (4A) may comprise passing water through the ash product for several minutes. Step (4A) may comprise passing water through the ash product for between 5 and 30 minutes, for example around 15 minutes. Step (4A) may comprise re-circulating water. Water which has passed through the ash product may thus be collected and passed through the ash product again and this may be repeated several times.

Suitably, step (4) comprises a step (4B) of washing the washed ash product of step (4A) with fresh water.

Suitably, the washing operation of step (4B) comprises applying water to the ash product of step (4A) and may comprise dewatering the combination to provide a washed ash product.

Step (4B) may comprise combining the washed ash product of step (4A) with fresh water and dewatering the combination to provide a washed ash product and a water product.

Step (4B) may comprise washing the ash product by passing water through it. The resultant ash product may be situated in a filter press and water may be applied to it at a pressure of between 2 and 15 bar, suitably between 5 and 10 bar, for example around 7 bar. The resultant ash product may thus be combined with water and dewatered substantially simultaneously as the pressure of application may cause the water to pass through the filter after application to the ash product.

Step (4B) may comprise passing water through the ash product for several minutes. Step (4B) may comprise passing water through the ash product for between 5 and 30 minutes, for example around 15 minutes. Step (4B) may comprise re-circulating water. Water which has passed through the ash product may thus be collected and passed through the ash product again. Alternatively, water may be passed through the ash product only once in step (4B)

Step (4B) may further comprise dewatering the washed ash product subsequent to the application of water. The dewatering operation may comprise pressing the washed ash product on a filter press to expel water through the filter. Suitably, the washed ash product is pressed at a pressure of between 5 and 25 bar, suitably between 10 and 20 bar, for example around 15 bar.

The dewatering operation of step (4B) may comprise air blowing the washed ash product on the filter press, suitably after it has been pressed, to expel water. The washed ash product may be blown with air at a pressure of between 2 and 15 bar, suitably between 5 and 10 bar, for example around 7 bar.

Suitably, the mass of fresh water used in step (4B) is between 50% and 150% of the mass of ash used in step (1). The mass of fresh water used in step (4B) may for example be substantially the same as the mass of ash used in step (1).

Suitably, the mass of fresh water used in step (4B) is between 10% and 50% of the mass of water used in step (1). The mass of fresh water used in step (4B) may for example be between 20% and 30% of the mass of water used in step (1).

Suitably, step (4) comprises the step (4A(i)) of forming a slurry of re-cycled water from step (3) and resultant ash product from step (3).

The resultant ash product of step (3) may comprise an ash slurry and step (4) may comprise a step (4A(i)) of diluting that ash slurry by adding re-cycled water to it.

Step (4) may comprise the step (4A(ii)) of dewatering the slurry of step (4A(i)).

Step (4A(ii)) may be performed subsequent to step (4A(i)) and/or may be performed substantially simultaneously therewith. Suitably steps (4A(i)) and (4A(ii)) are performed substantially simultaneously.

Suitably, step (4) comprises the step (4B(i)) of forming a slurry of fresh water and washed ash product from step (4A).

The washed ash product of step (4A) may comprise an ash slurry and step (4) may comprise a step (4B(i)) of diluting that ash slurry by adding fresh water to it.

Suitably, step (4) comprises the step (4B(ii)) of dewatering the slurry of step (4B(i)).

Step (4B(ii)) may be performed subsequent to step 4B(i) and/or may be performed substantially simultaneously therewith. Suitably steps (4B(i)) and (4B(ii)) are performed substantially simultaneously and then step (4B(ii)) is continued once step (4B(i)) has ended.

Suitably, step (3) comprises dewatering the waste ash slurry using a filter and step (4) comprises washing the resultant ash product. Suitably, step (4) comprises washing the resultant ash product left on the filter with water which passed through the filter when the waste ash slurry was dewatered in step (3). Step (4) suitably further comprises washing the washed ash product left on the filter after that washing operation with fresh water.

Step (4) may comprise washing the resultant ash product left on the filter in step (3) by re-slurrying it with the re-cycled water and then dewatering the resultant slurry. Step (4) may further comprise washing the washed ash product left on the filter after that washing operation by re-slurrying it with fresh water and then dewatering the resultant slurry.

Suitably, said washed ash product of step (4) comprises at least one component in a lower amount than does said resultant ash product of step (3). The washed ash product of step (4) may comprise said component or components in a lower amount measured as a percentage of the solid content of the resultant ash product and waste ash product respectively. Said component or components may comprise sodium and/or potassium salts.

Surprisingly, despite the fact that step (4) comprises returning components which have been removed from the resultant ash product in step (3) to the resultant ash product the washed ash product which is formed in step (4) may still have a lower level of said components than were present in the resultant ash product of step (3). The method may thus provide a beneficial means of washing an ash product to remove given components without the need to use large quantities of fresh water. Also surprisingly, the need for pre-washing operations prior to performing the method of the invention may be obviated by the effectiveness of step (4).

As used herein the term "waste ash" encompasses air pollution control (APC) residues which may also be referred to as fly ash or flue gas treatment residues. The "waste ash" may comprise residue produced by incinerating domestic and/or trade and/or clinical waste.

Suitably, the waste ash comprises carbon present due to activated carbon being combined with gases from an incineration process. Suitably, the waste ash comprises activated carbon.

Suitably, step (2), comprises the step of lowering the pH of the waste ash slurry. The method may thus comprise adding acid to the waste ash slurry after formation in step (1) rather than to the waste ash or to the water prior to combination in step (1).

Suitably, steps (1), (2), (3) and (4) are performed sequentially. Suitably, steps (1), (2), (3), (4A) and (4B) are performed sequentially.

Suitably, the method does not comprise the further step of washing waste ash prior to step (1).

The method may comprise separating a carbon component from the waste ash. The method may comprise the step (1A) of separating a carbon component from the waste ash. Suitably, the carbon component comprises activated carbon. Suitably, step (1A) is performed on a waste ash slurry. Suitably, the method comprises the step (1A) of separating organic molecules including dioxins and/or furans from the waste ash.

Step (1A) may be performed between steps (1) and (3), suitably between steps (1) and (2).

Suitably, organic components, suitably dioxins and/or furans are removed with the carbon component. Accordingly, step (1A) may comprise the removal of dioxins and/or furans.

Suitably, the method comprises forming a waste ash slurry such that dioxins and/or furans concentrate in the carbon component of the slurry. Suitably, dioxins and/or furans partition towards and/or bond to activated carbon within the waste ash slurry. Suitably, if the carbon component is removed from the remainder of the waste ash slurry, suitably before a neutralisation step, the majority of organics, including dioxins and/or furans may be removed from the end product.

Suitably, step (1A) utilises the relative density and/or particle size of the carbon component and the remainder of the waste ash slurry to separate at least a part of the carbon component off from the slurry.

A carbon component may be removed by a flotation method with the carbon floating to the surface and being removed, for example by a skimming process.

The performance of step (1A) may have a number of advantages including the removal of organics that may otherwise remain in the end (ash) product.

Suitably, the ash product produced by the method comprises an additive for use in cement manufacture. The method may comprise a method of manufacturing synthetic gypsum.

Suitably, the ash product of step (4) comprises synthetic gypsum which may be suitable for use in cement manufacture. Suitably, the method involves a processing step, suitably step (1A), which reduces the dioxin and/or furan level in the ash product by at least 60%, for example by around 90%. The synthetic gypsum may be substantially free of dioxins and/or furans.

Suitably, the waste ash is produced by treating combustion gases created during the incineration of waste. Suitably, said treatment comprises combining the combustion gases with hydrated lime and/or powder activated carbon (PAC).

The waste ash suitably comprises air pollution control (APC) residue. Preferably, the waste ash consists of APC residue. Suitably, the waste ash, suitably APC residue, comprises calcium hydroxide in an amount of 5% or more, for example 10% or more.

Suitably, the waste ash, suitably APC residue, comprises carbon component, suitably activated carbon, in an amount of between 1 and 10%, for example around 5%.

The waste ash, suitably APC residue, may comprise dioxins in an amount of 200 to 1000 ng/kg TEQ.

Suitably, the slurry produced in step (1) comprises water in an amount of between 50% and 98% by weight, preferably between 60% and 95% by weight, more preferably between 65% and 95% by weight, more preferably between 80% and 95% by weight, for example around 85% by weight.

Suitably, the slurry produced in step (1) comprises water in an amount of at least 55% by weight, for example at least: 60%; 65%; 70%; 75%; 80%; 85%; 90%; or 95% by weight.

Suitably, the slurry produced in step (1) comprises water in an amount of no more than 98% by weight, for example no more than: 97%; 96%; or 95% by weight.

Suitably, step (1) comprises combining water with the waste ash to dissolve soluble salts, suitably chloride and/or carbonate salts, present in the waste ash. Suitably, said chloride and/or carbonate salts comprises salts of a group 2 metal. Suitably, said chloride and/or carbonate salts comprise calcium salts.

Suitably, metal sulphates and/or hydroxides present in the waste ash are substantially not dissolved in step (1).

The water used in step (1) may comprise substantially pure water, for example mains water or river water. Alternatively, or in addition the water used in step (1) may comprise waste water, for example from an industrial process.

Step (1) may comprise combining water and waste ash by simultaneously introducing them to a combining vessel or mixing system.

Suitably, step (1) comprises mixing water and waste ash, for example by stirring and/or air agitation.

Suitably, step (2) comprises adding acid, preferably hydrochloric acid and/or sulphuric acid. Suitably, step (2) comprises adding acid to a waste ash slurry, suitably to a waste ash slurry after formation in step (1). The acid may comprise hydrochloric acid or sulphuric acid having a concentration of from around 5% to 95% in a suitable quantity to adjust the pH within the desired range.

Suitably, hydrochloric acid is used if the product of step (4) is to go to landfill. Suitably, sulphuric acid is used if the product of step (4) is to go for use in the cement industry.

Suitably, step (2) comprises adding acid such that the pH of the waste ash slurry is caused to lie in the range of pH3-12, preferably pH3-11, as measured at ambient temperature. Suitably, step (2) comprises adding acid to the waste ash slurry formed in step (1) to adjust the pH to lie in the range of pH3-8, for example pH3-5.

Suitably, in step (2) the pH of the waste ash slurry is adjusted to lie in the range of pH3.0-11.0, suitably 3.0-8.0, preferably in the range of pH3.0-5.0, for example around pH4.0.

Suitably, in step (2) the pH of the waste ash slurry is adjusted to be less than pH11.0, for example less than 11.5; 10.0; 9.5; 9.0; 8.5; 8.0; 7.5; 7.0; 6.5; 6.0; 5.5; 5.0 or 4.5.

Suitably, in step (2) the PH of the waste ash slurry is adjusted to be at least 3.0, for example at least 3.5; 4.0; 4.5; 5.0; 5.5; 6.0; 6.5; 7.0; or 7.5.

Suitably, in step (3) the waste ash slurry is dewatered by a mechanical dewatering means, for example by a plate and frame filter press and/or a centrifuge.

The ash product of step (3) may suitably comprise treated waste ash and water.

Suitably, the ash product of step (3) comprises water in an amount of no more than 70% by weight, for example in an amount of no more than 65%; 60%; 55%; 50%; 45%; 40%; 35%; 30%; 25%; 20%; 15%; or 10% by weight. The ash product of step (3) may suitably comprise water in an amount of between 5% and 65% by weight, for example around 40% by weight. Suitably, the ash product of step (3) comprises a filter cake. The ash product may be substantially solid.

Suitably, the ash product comprises at least 5% by weight less water than the waste ash slurry. The ash product may for example comprise at least 10%; 15%; 20%; 25%; 30%; 35%; 40%; 45%; 50%; 55%; 60%; 65%; 70%; 75%; 80%; 85%; or 90% by weight less water than the waste ash slurry. Suitably, the ash product comprises between 35% and 95% by weight less water than the waste ash slurry, for example around 60% by weight less.

Suitably, dewatering of the waste ash slurry in step (3) removes soluble salts together with the water. Said soluble salts suitably comprise soluble chloride and/or carbonate salts formerly present in the waste ash. Suitably, said chloride and/or carbonate salts comprises salts of a group 2 metal. Suitably, said chloride and/or carbonate salts comprise calcium salts.

Suitably, two products are produced in step (3): an ash product and a water product.

Suitably, the dewatering step (step (3)) comprises separating the slurry into a substantially solid phase and a liquid phase.

Suitably, step (3) comprises separating insoluble salts and inert compounds from soluble salts and water.

Suitably, the water product of step (3) comprises between 5% and 95% of the water formerly present in the waste ash slurry. The water product of step (3) may comprise between 20% and 90% of the water formerly present in the waste ash slurry, for example around 60%.

Suitably, the water product of step (3) comprises soluble salts formerly present in the waste ash. The water product may thus comprise a "brine solution".

Suitably, the water product of step (3) comprises soluble chloride and/or carbonate salts formerly present in the waste ash. Suitably, said chloride and/or carbonate salts comprises salts of a group 2 metal. Suitably, said chloride and/or carbonate salts comprise calcium salts.

The water product may comprise 20% or more, for example 50% or more of the soluble salts formerly present in the waste ash.

Suitably, in step (4) the waste ash slurry is dewatered by a mechanical dewatering means, for example by a plate and frame filter press and/or a centrifuge.

The washed ash product of step (4) may suitably comprise treated waste ash and water.

Suitably, the ash product of step (4) comprises water in an amount of no more than 70% by weight, for example in an amount of no more than 65%; 60%; 55%; 50%; 45%; 40%; 35%; 30%; 25%; 20%; 15%; or 10% by weight. The ash product of step (4) may suitably comprise water in an amount of between 5% and 65% by weight, for example around 35% by weight. Suitably, the ash product of step (4) comprises a filter cake. The ash product may be substantially solid.

Suitably, the ash product comprises at least 5% by weight less water than the waste ash slurry formed in step (1). The ash product may for example comprise at least 10%; 15%; 20%; 25%; 30%; 35%; 40%; 45%; 50%; 55%; 60%; 65%; 70%; 75%; 80%; 85%; or 90% by weight less water than the waste ash slurry. Suitably, the ash product comprises between 35% and 95% by weight less water than the waste ash slurry, for example around 60% by weight less.

Suitably, dewatering of the waste ash slurry in step (4) removes soluble salts together with the water. Said soluble salts suitably comprise soluble chloride and/or carbonate salts formerly present in the waste ash. Suitably, said chloride and/or carbonate salts comprises salts of a group 2 metal. Suitably, said chloride and/or carbonate salts comprise calcium salts.

Suitably, two products are produced in step (4): an ash product and a water product.

Suitably, the dewatering step (step (4)) comprises separating the slurry into a substantially solid phase and a liquid phase.

Suitably, step (4) comprises separating insoluble salts and inert compounds from soluble salts and water.

Suitably, two products are produced in step (4A): an ash product and a water product.

Suitably, the dewatering step (step (4A)) comprises separating the slurry into a substantially solid phase and a liquid phase.

Suitably, step (4A) comprises separating insoluble salts and inert compounds from soluble salts and water.

Suitably, the water product of step (4A) comprises between 5% and 95% of the water formerly present in the ash slurry of step (4A). The water product of step (4A) may comprise between 20% and 90% of the water formerly present in the ash slurry of step (4A), for example around 60%.

Suitably, the water product of step (4A) comprises soluble salts formerly present in the resultant ash product of step (3). The water product may thus comprise a "brine solution".

Suitably, the water product of step (4A) comprises soluble chloride and/or carbonate salts formerly present in the resultant ash product of step (3). Suitably, said chloride and/or carbonate salts comprises salts of a group 2 metal. Suitably, said chloride and/or carbonate salts comprise calcium salts.

The water product of step (4A) may comprise 20% or more, for example 50% or more of the soluble salts formerly present in the resultant ash product of step (3). The water product of step (4A) may comprise 20% or more, for example 50% or more of the soluble salts formerly present in the waste ash.

Suitably, two products are produced in step (4B): an ash product and a water product.

Suitably, the dewatering step (step (4B)) comprises separating the slurry into a substantially solid phase and a liquid phase.

Suitably, step (4B) comprises separating insoluble salts and inert compounds from soluble salts and water.

Suitably, the water product of step (4B) comprises between 5% and 95% of the water formerly present in the ash slurry of step (4B). The water product of step (4B) may comprise between 20% and 90% of the water formerly present in the ash slurry of step (4B), for example around 60%.

Suitably, the water product of step (4A) is suitable for discharge to a sewer following further processing to remove and/or dilute metal hydroxides and soluble salts therein. The water product of step (4B) may be suitable for discharge to a sewer. Further processing of the water product of step (4A) may comprise combining it with the water product of step (4B). Following step (4) the method may thus comprise discharging the water product.

Suitably, the ash product of step (4) is suitable for disposal as landfill waste. Following step (4) the method may thus comprise disposing of the ash product by landfill. As a consequence of soluble salts being removed from the waste ash during the method of the first aspect a lower mass of ash product for disposal may be created than would otherwise be the case. The ash product may be suitable for disposal as non-hazardous landfill waste rather than as hazardous landfill waste.

Alternatively, or in addition if the product of step (4) is high in sulphate and/or other materials suitable for cement manufacture it may be used as alternative raw material in cement production. Following step (4) the method may thus comprise using the ash product for cement production.

According to a second aspect of the present invention there is provided a method of manufacturing cement, the method comprising:
(a) incinerating waste and combining the combustion gases with activated carbon and hydrated lime to produce waste ash;
(b) treating the waste ash according to the method of the first aspect; and
(c) using the ash product from step (b) as synthetic gypsum in the manufacture of cement.

Suitably, the method may comprise any feature as described in relation to the first aspect except where such features are mutually exclusive.

According to a third aspect of the present invention there is provided a cement material comprising an ash product produced by the method of the first aspect.

### BRIEF DESCRIPTION OF DRAWINGS

The present invention will now be illustrated by way of example with reference to the accompanying drawings in which:

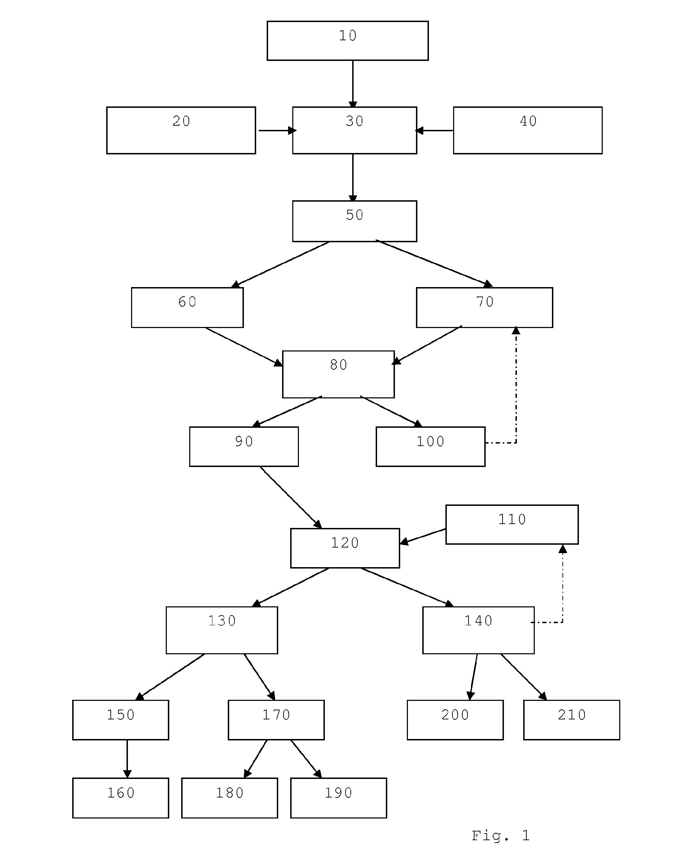

Figure 1 is a flow diagram illustrating the stages of a treatment process.

### DETAILED DESCRIPTION OF PREFERRED EMBODIMENTS

Figure 1 is a flow diagram representing the stages of a waste ash treatment process.

The waste ash to be treated in this process may be produced by incinerating municipal waste and may thus vary in composition. Suitably it will comprise APC residue and may thus be high in lime introduced during a gas cleaning process.

According to the process waste ash 10 is produced by the incineration of municipal waste (comprising one or more of domestic, trade and clinical waste). The waste ash 10 is combined with water (or waste water) 20 in a combining vessel (step (1)) in a ratio of water:ash of at least 2:1. the water and ash combination is mixed and acid or waste acid 40, either HCl or H₂SO₄, is added (step (2)) to create a pH adjusted waste ash slurry 30 having a pH lying within the range of pH 3-11 and desirably pH3-5. This step will suitably remove excess lime contained in the waste ash. Soluble salts from the waste ash will also suitably be dissolved in the water of the slurry.

Following this the waste ash slurry is transferred to a dewatering station 50 and subjected to a dewatering step (step (3)) comprising pressing the slurry in a filter press. This produces a resultant ash product (filter cake) 60 comprising a substantially solid phase and a water product 70 comprising a liquid phase comprising water and soluble salts.

The water product 70 is then recycled and used to wash the resultant ash product 60 (step (4A)). The washing step comprises recombining the water product 70 with the resultant ash product of step (3) in the dewatering station to form an ash slurry 80. The water product 70 is passed through the dewatering station at pressure so the washing step produces a washed ash product (filter cake 90) comprising a substantially solid phase and a water product 100 comprising a liquid phase comprising water and soluble salts.

In a preferred embodiment the water product 100 is recirculated with the water product 70 to wash the ash product and on completion of step (4A) can be processed for discharge to sewer.

The washed ash product (filter cake 90) is washed further with fresh water 110 (step (4B)). The washing step comprises combining the fresh water 110 with the ash product of step (4A) in the dewatering station to form an ash slurry 120. The water 110 is passed through the dewatering station at pressure so the washing step produces a washed ash product (filter cake 130) comprising a substantially solid phase and a water product 140 comprising a liquid phase comprising water and soluble salts.

In a preferred embodiment the water product 140 is recirculated with the fresh water 110 to wash the ash product and on completion of step (4A) can be processed for discharge to sewer.

The slurry 120 is further separated into the ash product (filter cake 130) and water product 140 by subjecting it to a dewatering step comprising pressing the slurry in a filter press. The filter press is then air blown to further dry the cake 130.

If the ash product 130 is high in constituents such as sulphides suitable for cement manufacture then it may comprise a recyclable cake 150 and may be used as a raw material 160 for the cement industry. If the ash product 130 is not suitable for cement manufacture then it may comprise a non-recyclable cake 170. In this case it may be disposed of by landfill, either as hazardous waste 180 or non-hazardous waste 190 depending upon its composition.

The water product 140 may be disposed of by discharge to sewer or the environment 200. Alternatively, if it has appropriately low levels of soluble salts it may be recycled 210 and used as waste water 20 in a slurrying step of a subsequent treatment process or combined with a water product 70 and used in a washing step of a subsequent treatment process.

Suitable process conditions may be better understood with reference to the following example:

1 tonne of waste ash consisting of APC residue was treated. The APC residue was produced by incinerating municipal waste and performing a gas cleaning process on combustion gases. This APC residue comprised around 30% calcium hydroxide with around 20% free lime. The waste ash was analysed and found to include, among others, the constituents identified in Table 1.

| Table 1 | |
|---|---|
| Constituent | Amount |
| Al₂O₃ | 2.39% dry solids |
| CaO | 34.01% dry solids |
| Fe₂O₃ | 0.76% dry solids |
| SiO₂ | 4.68% dry solids |
| K₂O | 3.24% dry solids |
| MgO | 0.54% dry solids |
| MnO | 0.05% dry solids |
| Na₂O | 2.23% dry solids |
| SrO | 0.04% dry solids |
| TiO₂ | 0.78% dry solids |
| Na₂O + 0.67K₂O | 4.40% dry solids |
| Chloride (2:1 water soluble) | 67500mg/kg |
| *Although the ash comprised 34.01% dry solids CaO it was determined to comprise 21.49% free lime. | |

The waste ash was combined with 4 tonnes of water and mixed in a combining (mixing) vessel for around 10 minutes at ambient temperature to produce a waste ash slurry. The slurry was then treated with 100kg of 77% sulphuric acid and mixed to adjust the pH to pH3.

The pH adjusted and treated slurry was then transferred to a plate and frame filter press and dewatered to produce a solid phase (resultant ash product) having a water content of around 40% by weight and a liquid phase (water product).

The resultant ash product was then washed to remove soluble salts.

In a first stage of washing the water product (filtrate) was recycled and passed through the ash product and filter press at a pressure of around 7 bar for 15 minutes. Water which passed through the filter during this time was recirculated and passed through the ash product and filter again.

In a second stage of washing the washed ash product of the first stage was washed further with 1000 kg fresh water for 15 minutes. Fresh water was passed through the ash product and filter press at a pressure of around 7 bar for 15 minutes. Water which passed through the filter during this time was recirculated and passed through the ash product and filter again.

The ash product was then dewatered by applying a 15 bar membrane to the press. Following this the filter press was air blown at 7 bar until there was no evidence of any liquor remaining.

The ash product was determined to comply with the requirements for use in cement manufacture as synthetic gypsum and the water products to be suitable for discharge to a sewer after treatment including processing through a DAF unit for metal removal. The ash product was analysed and found to comprise 88% Gypsum (CaSO₄.2H₂O) and 7% anhydrite (CaSO₄).

In an alternative embodiment, not shown, a waste ash treatment process includes the step of separating a carbon component comprising activated carbon from the waste ash.

The process is substantially the same as that of the embodiment of Figure 1. The carbon component is separated out by filtration once the slurry is formed and before the slurry is dewatered.

It will be appreciated that preferred embodiments of the present invention may be viable and may meet the requirements of Waste Acceptance Criteria (WAC), licence conditions for non-hazardous landfill and the parameters of a regular sewer discharge consent.

Preferred embodiments of the present invention may reduce the mass of waste for landfill by more than 50% and in most cases the treated mass may be suitable for non-hazardous landfill as opposed to hazardous landfill. Preferred embodiments of the present invention may achieve this by dissolving soluble calcium chloride and carbonate salts in the water and by ensuring that sulphates and metal salts which are unsuitable for discharge to sewer remain insoluble.

Preferred embodiments of the present invention may remove leachable components from waste ash in order that APC residue treated material meets Waste Acceptance criteria (WAC) (and may therefore be suitable for hazardous landfill) and in some cases depending on the levels of other constituents such as metals may render the treated APC mass suitable for non-hazardous landfill.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of treating waste ash, the method comprising the steps of:
(1) combining waste ash with water to form a waste ash slurry comprising water in an amount of at least 50% by weight;
(2) treating the waste ash slurry and/or the waste ash and/or water to be combined with the waste ash to lower the pH thereof; and
(3) dewatering the waste ash slurry such that the resultant ash product comprises water in a lower amount than said waste ash slurry; and wherein the method further comprises the step of:
(4) washing the resultant ash product of step (3) with water to provide a washed ash product and wherein said washing comprises re-cycling water removed from the waste ash slurry in step (3).

2. A method according to claim 1, wherein step (3) comprises dewatering the waste ash slurry using a filter press and the water removed from the waste ash slurry in step (3) which is re-cycled in step (4) comprises the filtrate.

3. A method according to claim 1 or 2, wherein step (4) comprises dewatering the washed ash product so as to provide a dewatered and washed ash product.

4. A method according to any preceding claim, wherein the washing operation of step (4) comprises washing the resultant ash product of step (3) with re-cycled water removed from the waste ash slurry in step (3) and fresh water.

5. A method according to any preceding claim, wherein step (4) comprises step (4A) of washing with re-cycled water removed from the waste ash slurry in step (3, step (4B) of washing with fresh water and wherein steps (4A) and (4B) are performed sequentially.

6. A method according to claim 5, wherein step (4A) comprises re-cycling water removed from the waste ash slurry in step (3) and recombining it with the resultant ash product of step (3) and dewatering the combination to provide a washed ash product and a water product and wherein step (4A) comprises re-circulating water such that water which has passed through the ash product is collected and passed through the ash product again.

7. A method according to any of claims 5 or 6, wherein step (4B) comprises combining the washed ash product of step (4A) with fresh water and dewatering the combination to provide a washed ash product and a water product and wherein step (4B) comprises re-circulating water such that water which has passed through the ash product is collected and passed through the ash product again.

8. A method according to any of claims 5 to 7, wherein step (4B) further comprises dewatering the washed ash product subsequent to the application of water and wherein the dewatering operation comprises pressing the washed ash product on a filter press to expel water through the filter and/or air blowing the washed ash product on the filter press, to expel water.

9. A method according to any preceding claim, wherein step (2), comprises the step of lowering the pH of the waste ash slurry.

10. A method according to any preceding claim, wherein, the method does not comprise the further step of washing waste ash prior to step (1).

11. A method according to any preceding claims, wherein the method comprises the step (1A) of separating a carbon component from the waste ash and/or wherein the method comprises the step (1A) of separating organic molecules including dioxins and/or furans from the waste ash.

12. A method according to any preceding claim, wherein a carbon component is removed by a flotation method with the carbon floating to the surface and being removed.

13. A method according to any preceding claim, wherein steps (1), (2), (3) and (4) are performed sequentially and wherein the ash product produced by the method comprises an additive for use in cement manufacture

14. A method of manufacturing cement, the method comprising:
(a) incinerating waste and combining the combustion gases with activated carbon and hydrated lime to produce waste ash;
(b) treating the waste ash according to the method of any of claims 1 - 13; and
(c) using the ash product from step (b) as synthetic gypsum in the manufacture of cement.

15. A cement material comprising an ash product produced by the method of any of claims 1 - 13.
